# EUROPEAN PATENT APPLICATION

(11) **EP 4 582 661 A1**
(43) Date of publication of application: **09.07.2025**
(21) Application number: 22959724.0
(22) Date of filing: 26.09.2022
(51) Int. Cl.: E05F 15/77, B60R 25/00

(54) **VEHICLE, VEHICLE DOOR CONTROL METHOD THEREFOR, AND DEVICE**

(71) Applicant: Shenzhen Yinwang Intelligent Technologies Co., Ltd., Shenzhen, Guangdong 518129 (CN)
(72) Inventor: ZHANG, Wei, Shenzhen, Guangdong 518129 (CN); PEI, Yan, Shenzhen, Guangdong 518129 (CN); JI, Qianchao, Shenzhen, Guangdong 518129 (CN)
(74) Representative: Maiwald GmbH
(86) International application number: PCT/CN2022/121187
(87) International publication number: WO 2024/065072

(57) **Abstract**

This application provides a vehicle, and a vehicle door control method and apparatus, and belongs to the field of vehicles. According to the solution provided in this application, location information of a Bluetooth vehicle key can be determined through a Bluetooth connection, and a first distance that is between the vehicle and the Bluetooth vehicle key and that is detected through an ultrasonic wave can be determined based on the location information of the Bluetooth vehicle key. Because precision of the first distance detected through the ultrasonic wave is high, reliability of unlocking or locking a vehicle door based on the first distance is high. **In** addition, in this method, no new chip needs to be added to the vehicle key, and it only needs to be ensured that the vehicle key has a Bluetooth communication function. Because a dependency on performance of the vehicle key is low, application flexibility is effectively improved.

## Description

### TECHNICAL FIELD

This application relates to the field of vehicles, and in particular, to a vehicle, and a vehicle door control method and apparatus.

### BACKGROUND

To improve flexibility of controlling a vehicle door of a vehicle and improve user experience, the vehicle generally has an automatic vehicle door unlocking function.

The vehicle having the automatic vehicle door unlocking function usually includes a Bluetooth positioning system and a door control system. The Bluetooth positioning system may establish a Bluetooth connection to a vehicle key having a Bluetooth module, and detect a distance between the vehicle key and the vehicle through the Bluetooth connection. The door control system may automatically unlock the vehicle door when the distance is less than a distance threshold.

However, because Bluetooth positioning precision is low, reliability of unlocking the vehicle door in the foregoing manner is low.

### SUMMARY

This application provides a vehicle, and a vehicle door control method and apparatus, to resolve a technical problem that reliability of unlocking a vehicle door is low because Bluetooth positioning precision is low.

According to a first aspect, a vehicle door control method is provided, and is applied to a vehicle. The method includes: determining location information of a Bluetooth vehicle key through a Bluetooth connection to the Bluetooth vehicle key; determining, based on the location information of the Bluetooth vehicle key, a first distance that is between the vehicle and the Bluetooth vehicle key and that is detected through an ultrasonic wave; and unlocking or locking a vehicle door of the vehicle based on the first distance.

Because precision of the first distance detected through the ultrasonic wave is high, reliability of unlocking or locking the vehicle door based on the first distance is high. In addition, in this method, no new chip needs to be added to the vehicle key, and it only needs to be ensured that the vehicle key has a Bluetooth communication function. Therefore, a dependency on performance of the vehicle key is low, and application flexibility is high.

Optionally, a process of unlocking or locking the vehicle door of the vehicle based on the first distance may include: unlocking the vehicle door if the first distance is less than a first threshold; or locking the vehicle door if the first distance is greater than a second threshold. The second threshold is greater than or equal to the first threshold.

The first threshold may be determined based on a size of an unlocking area of the vehicle, and the second threshold may be determined based on a size of a locking area of the vehicle. When the first distance is less than the first threshold, the vehicle may determine that the Bluetooth vehicle key is located in the unlocking area. Therefore, the vehicle may unlock the vehicle door. When the first distance is greater than the second threshold, the vehicle may determine that the Bluetooth vehicle key is located in the locking area. Therefore, the vehicle may lock the vehicle door.

Optionally, the vehicle may include a plurality of ultrasonic sensors, and detection ranges of the plurality of ultrasonic sensors are different from each other. In a first optional implementation, the location information includes a second distance between the Bluetooth vehicle key and the vehicle, and a process of determining, based on the location information of the Bluetooth vehicle key, the first distance that is between the vehicle and the Bluetooth vehicle key and that is detected through the ultrasonic wave may include: obtaining distances that are between the vehicle and a plurality of obstacles and that are detected by the plurality of ultrasonic sensors, and determining, as the first distance between the vehicle and the Bluetooth vehicle key, a distance that is closest to the second distance and that is in the distances detected by the plurality of ultrasonic sensors.

In a second optional implementation, the location information includes an area in which the Bluetooth vehicle key is located, and a process of determining, based on the location information of the Bluetooth vehicle key, the first distance that is between the vehicle and the Bluetooth vehicle key and that is detected through the ultrasonic wave may include: detecting the first distance between the vehicle and the Bluetooth vehicle key through at least one target ultrasonic sensor in the plurality of ultrasonic sensors. A detection range of the at least one target ultrasonic sensor overlaps the area in which the Bluetooth vehicle key is located.

The ultrasonic wave emitted by the ultrasonic sensor may be reflected by a user carrying the Bluetooth vehicle key, or may be reflected by another surrounding obstacle (for example, another vehicle or another pedestrian). Therefore, in addition to the distance between the vehicle and the Bluetooth vehicle key, the distances detected by the vehicle through the plurality of ultrasonic sensors may further include a distance between the vehicle and another obstacle. In the foregoing two implementations, the vehicle may determine, with reference to the location information of the Bluetooth vehicle key that is determined through the Bluetooth connection, the first distance that is between the vehicle and the Bluetooth vehicle key and that is detected through the ultrasonic wave. Therefore, interference from another obstacle can be avoided, and accuracy of the detected first distance can be determined.

Optionally, the vehicle may include a plurality of Bluetooth nodes, and the plurality of Bluetooth nodes are distributed at different locations of a vehicle body of the vehicle. A process of determining the location information of the Bluetooth vehicle key through the Bluetooth connection to the Bluetooth vehicle key may include: determining, based on a Bluetooth signal detected by the plurality of Bluetooth nodes, the area in which the Bluetooth vehicle key is located. For example, the vehicle may determine, based on a three-point positioning method, the area in which the Bluetooth vehicle key is located.

Optionally, a process of determining, based on the location information of the Bluetooth vehicle key, the first distance that is between the vehicle and the Bluetooth vehicle key and that is detected through the ultrasonic wave may include: if the second distance that is between the vehicle and the Bluetooth vehicle key and that is determined based on the location information is less than a third threshold, determining, based on the location information, the first distance that is between the vehicle and the Bluetooth vehicle key and that is detected through the ultrasonic wave.

The third threshold may be less than or equal to an upper limit of an effective positioning range of an ultrasonic positioning system of the vehicle. In other words, after determining, through the Bluetooth connection, that the Bluetooth vehicle key is already within the effective positioning range of the ultrasonic positioning system, the vehicle may detect the first distance between the vehicle and the Bluetooth vehicle key through the ultrasonic wave. Therefore, it can be ensured that the Bluetooth vehicle key can be effectively detected through the ultrasonic wave, thereby ensuring reliability and accuracy of the determined first distance.

Optionally, a process of determining, based on the location information of the Bluetooth vehicle key, the first distance that is between the vehicle and the Bluetooth vehicle key and that is detected through the ultrasonic wave may include: if a status of the vehicle meets a target status, determining, based on the location information, the first distance that is between the vehicle and the Bluetooth vehicle key and that is detected through the ultrasonic wave. The target status may include: no user takes a seat of the vehicle, and/or the vehicle door is in a closed state.

When detecting that the status of the vehicle meets the target status, the vehicle may determine that no user takes the seat of the vehicle, and/or determine that the vehicle door is closed. Therefore, it may be determined that the vehicle has a requirement for unlocking or locking the vehicle door. In this case, the first distance may be detected through the ultrasonic wave, and the vehicle door may be unlocked or locked based on the first distance. In this way, reliability and security of unlocking or locking the door can be ensured.

Optionally, the method may further include: performing at least one of the following operations based on unlocking the vehicle door of the vehicle: turning on a puddle light of the vehicle; playing a first prompt tone, where the first prompt tone indicates that the vehicle door is unlocked; turning on an air conditioner of the vehicle; starting an engine of the vehicle; and sending vehicle status information of the vehicle to the Bluetooth vehicle key through the Bluetooth connection.

Based on the foregoing operations, the user can accurately learn of a vehicle door status and/or the status of the vehicle, and an operation that needs to be performed by the user after the user gets on the vehicle can be simplified, thereby effectively improving user experience.

Optionally, the method may further include: performing at least one of the following operations based on locking the vehicle door of the vehicle: closing a window, turning off a light, and turning off an air conditioner of the vehicle; playing a second prompt tone, where the second prompt tone indicates that the vehicle door is locked; if the vehicle stops and an engine of the vehicle is in a non-start state, starting a parking system of the vehicle; and sending vehicle status information of the vehicle to the Bluetooth vehicle key through the Bluetooth connection.

Based on the foregoing operations, the user can accurately learn a vehicle door status and/or the status of the vehicle, and safety of the vehicle can be effectively ensured and energy consumption of the vehicle can be reduced.

According to a second aspect, a vehicle door control apparatus is provided. The vehicle door control apparatus may include at least one module, and the at least one module may be configured to implement the vehicle door control method provided in the first aspect.

According to a third aspect, a vehicle door control apparatus is provided. The vehicle door control apparatus may include a memory, a processor, and a computer program that is stored in the memory and that can run on the processor. When executing the computer program, the processor may implement the vehicle door control method provided in the first aspect.

According to a fourth aspect, a computer-readable storage medium is provided. The computer-readable storage medium stores instructions, and the instructions are executed by a processor, to implement the vehicle door control method provided in the first aspect.

According to a fifth aspect, a computer program product including instructions is provided. The instructions are executed by a processor, to implement the vehicle door control method provided in the first aspect.

According to a sixth aspect, a vehicle is provided. The vehicle may include a vehicle door and the vehicle door control apparatus provided in any one of the foregoing aspects.

According to a seventh aspect, a chip is provided. The chip may be applied to the vehicle provided in the foregoing aspect. The chip may include a programmable logic circuit and/or program instructions. The chip is configured to implement the vehicle door control method provided in the first aspect.

In conclusion, this application provides the vehicle and the vehicle door control method and apparatus. According to the solution provided in this application, the location information of the Bluetooth vehicle key can be determined through the Bluetooth connection, and the first distance that is between the vehicle and the Bluetooth vehicle key and that is detected through the ultrasonic wave can be determined based on the location information of the Bluetooth vehicle key. Because precision of the first distance detected through the ultrasonic wave is high, reliability of unlocking or locking the vehicle door based on the first distance is high. In addition, in the solution provided in this application, a chip does not need to be added to the vehicle key, and it only needs to be ensured that the vehicle key has the Bluetooth communication function. Therefore, a dependency on performance of the vehicle key is low, and application flexibility is effectively improved.

### BRIEF DESCRIPTION OF DRAWINGS

FIG. 1 is a diagram of an application scenario of a vehicle door control method according to an embodiment of this application;
FIG. 2 is a diagram of an application scenario of another vehicle door control method according to an embodiment of this application;
FIG. 3 is a diagram of a structure of a vehicle door control apparatus according to an embodiment of this application;
FIG. 4 is a flowchart of a vehicle door control method according to an embodiment of this application;
FIG. 5 is a flowchart of another vehicle door control method according to an embodiment of this application;
FIG. 6 is a flowchart of still another vehicle door control method according to an embodiment of this application;
FIG. 7 is a flowchart of yet another vehicle door control method according to an embodiment of this application;
FIG. 8 is a diagram of a structure of another vehicle door control apparatus according to an embodiment of this application; and
FIG. 9 is a diagram of a structure of still another vehicle door control apparatus according to an embodiment of this application.

### DESCRIPTION OF EMBODIMENTS

With reference to the accompanying drawings, the following describes in detail a vehicle, and a vehicle door control method and apparatus provided in embodiments of this application.

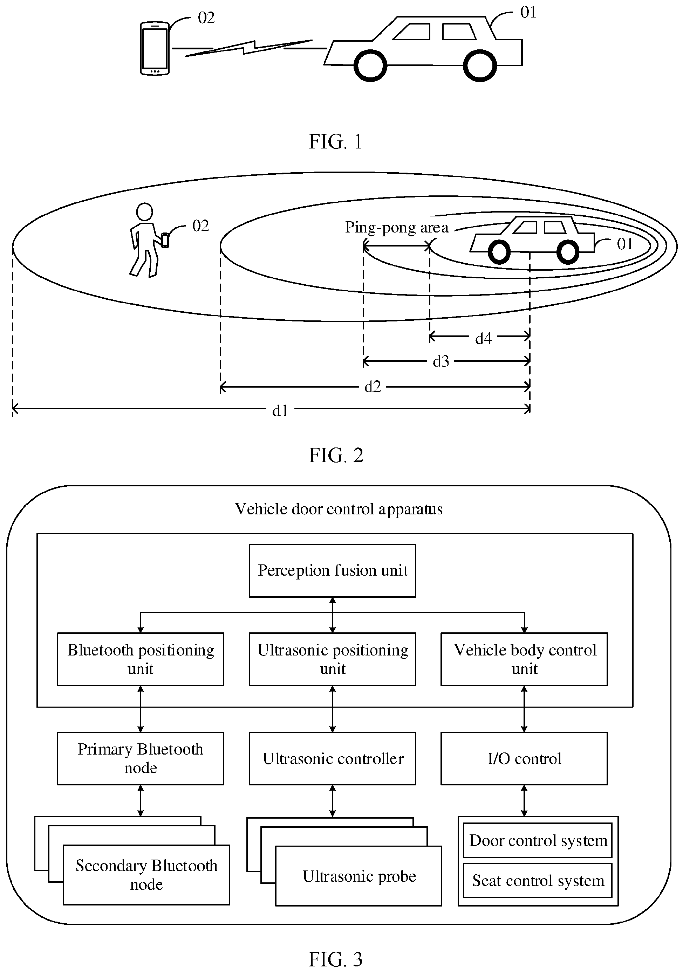

FIG. 1 is a diagram of an application scenario of a vehicle door control method according to an embodiment of this application. As shown in FIG. 1, the application scenario may include a vehicle 01 and a vehicle key 02. The vehicle 01 may be a new energy vehicle, a fuel vehicle, or the like. The new energy vehicle may include a pure electric vehicle, a hybrid vehicle, a plug-in hybrid vehicle, a fuel cell vehicle, or the like. In addition, the vehicle 01 may be a car (for example, a saloon or a bus), a tricycle, or another vehicle having a vehicle door.

The vehicle key 02 may be a Bluetooth vehicle key having a Bluetooth module, and the vehicle key 02 can establish a Bluetooth connection to a Bluetooth module in the vehicle 01. In addition, the vehicle key 02 may be a dedicated physical vehicle key, or may be a virtual digital vehicle key. A carrier of the digital vehicle key may be a mobile terminal having a Bluetooth module, like a mobile phone, a tablet computer, a notebook computer, or a wearable device. Both the Bluetooth module in the vehicle 01 and the Bluetooth module in the vehicle key 02 may be Bluetooth low energy (Bluetooth low energy, BLE) modules.

To improve efficiency of unlocking and locking a vehicle door and improve user experience, the vehicle 01 has a vehicle door automatic control function. As shown in FIG. 2, in a process in which a user carries the vehicle key 02 and approaches the vehicle 01, when a distance between the vehicle key 02 and the vehicle 01 is less than a Bluetooth communication distance d1 (for example, 50 meters), a Bluetooth connection can be established between the vehicle key 02 and the vehicle 01. The vehicle 01 may detect the distance between the vehicle 01 and the vehicle key 02 in real time through the Bluetooth connection. When the distance is less than a guest reception distance d2 (for example, 8 meters), the vehicle 01 may automatically turn on a puddle light. When the distance is less than an unlocking distance d4 (for example, 2 meters), the vehicle 01 may automatically unlock the vehicle door. In a process in which the user carries the vehicle key 02 and leaves the vehicle 01, the vehicle 01 can also detect the distance between the vehicle 01 and the vehicle key 02 in real time through the Bluetooth connection. When the distance is greater than a locking distance d3 (for example, 5 meters), the vehicle 01 may automatically lock the vehicle door.

However, because Bluetooth positioning precision is low, accuracy of the distance that is between the vehicle 01 and the vehicle key 02 and that is detected by the vehicle 01 through the Bluetooth connection is low. When an actual distance between the vehicle key 02 and the vehicle 01 is greater than the unlocking distance d4 and less than the locking distance d3, the vehicle 01 may repeatedly unlock and lock the vehicle door due to an error in the detected distance. In other words, there is a ping-pong area between the unlocking distance d4 and the locking distance d3.

To avoid a problem that the vehicle 01 repeatedly unlocks and locks the vehicle door when the vehicle key 02 is located in the ping-pong area, the vehicle key 02 may be positioned based on an ultra wide band (ultra wide band, UWB) positioning technology. However, in the UWB positioning technology, a UWB chip needs to be installed on both the vehicle 01 and the vehicle key 02. Therefore, application flexibility of the UWB positioning technology is poor, and costs are high.

Embodiments of this application provide a vehicle, to resolve a technical problem that reliability of unlocking or locking a vehicle door is low based on Bluetooth positioning. In addition, in the solution provided in this embodiment of this application, no new chip needs to be added to the vehicle key, application flexibility is high, and costs are low. FIG. 3 is a diagram of a structure of a vehicle door control apparatus in a vehicle according to an embodiment of this application. As shown in FIG. 3, the vehicle door control apparatus may include a perception fusion unit, a Bluetooth positioning system, an ultrasonic positioning system, and a vehicle body control system.

The Bluetooth positioning system may include a Bluetooth positioning unit, one primary Bluetooth node, and a plurality of Bluetooth secondary nodes. The one primary Bluetooth node and the plurality of secondary Bluetooth nodes may be distributed at different locations of a vehicle body, and can detect a distance between the vehicle and a Bluetooth vehicle key. Each secondary Bluetooth node may further report a detected distance to the primary Bluetooth node. The primary Bluetooth node may report distances to the Bluetooth positioning unit, so that the Bluetooth positioning unit performs preliminary coarse positioning on the Bluetooth vehicle key. For example, the Bluetooth positioning unit may determine, based on the received distances, the distance between the Bluetooth vehicle key and the vehicle, and determine an area in which the Bluetooth vehicle key is located.

The ultrasonic positioning system may include an ultrasonic positioning unit, one ultrasonic controller, and a plurality of ultrasonic probes. Each ultrasonic probe is also called an ultrasonic sensor (ultrasonic sensor, USS). Detection ranges of the plurality of ultrasonic probes are different from each other, and all the ultrasonic probes can detect distances between the plurality of ultrasonic probes and the Bluetooth vehicle key through ultrasonic waves. In addition, each ultrasonic probe may report a detected distance to the ultrasonic controller, and the ultrasonic controller may report distances to the ultrasonic positioning unit, so that the ultrasonic positioning unit performs accurate positioning on the Bluetooth vehicle key.

The vehicle body control system may include: a vehicle body control unit, a door control system, and a seat control system. The vehicle body control unit may be separately connected to the door control system and the seat control system through an input/output (input/output, I/O) interface. The door control system can provide vehicle door status information of a vehicle door to the vehicle body control unit and provide an operation interface of a door lock. The seat control system can provide seat status information and seat belt information to the vehicle body control unit. The seat status information may indicate whether a seat of the vehicle is taken by a user, and the seat belt information may indicate whether a seat belt buckle of the vehicle is inserted into a seat belt jack.

The perception fusion unit is separately connected to the Bluetooth positioning unit, the ultrasonic positioning unit, and the vehicle body control unit, and can determine, based on a positioning result of the Bluetooth vehicle key by the Bluetooth positioning unit, whether to obtain a positioning result of the ultrasonic positioning system. After the positioning result of the Bluetooth vehicle key by the ultrasonic positioning system is obtained, the vehicle door may be controlled to be unlocked or locked based on the positioning result of the ultrasonic positioning system. In addition, the perception fusion unit can further combine the positioning result of the ultrasonic positioning system with the vehicle door status, the seat status, and/or the seat belt information that are obtained by the vehicle body control unit, to accurately control the vehicle door to be unlocked or locked.

It may be understood that the perception fusion unit, the Bluetooth positioning unit, the ultrasonic positioning unit, and the vehicle body control unit in the vehicle body control apparatus may be integrated, for example, may be integrated into a vehicle key perception fusion module.

Compared with Bluetooth positioning, ultrasonic positioning has higher precision. Therefore, it can be ensured that reliability is high when the vehicle unlocks or locks the vehicle door. Precision of Bluetooth positioning is generally about 1 meter (m), and precision of ultrasonic positioning may generally reach a centimeter (cm) level.

In addition, in the solution provided in this embodiment of this application, no additional chip needs to be added to the vehicle key. Therefore, the solution can be effectively compatible with an existing Bluetooth vehicle key, and application flexibility of the solution is high. In addition, because costs of the ultrasonic positioning system are low, and the ultrasonic positioning system may reuse an existing ultrasonic sensor in the vehicle, an increase in costs of the vehicle can be effectively avoided.

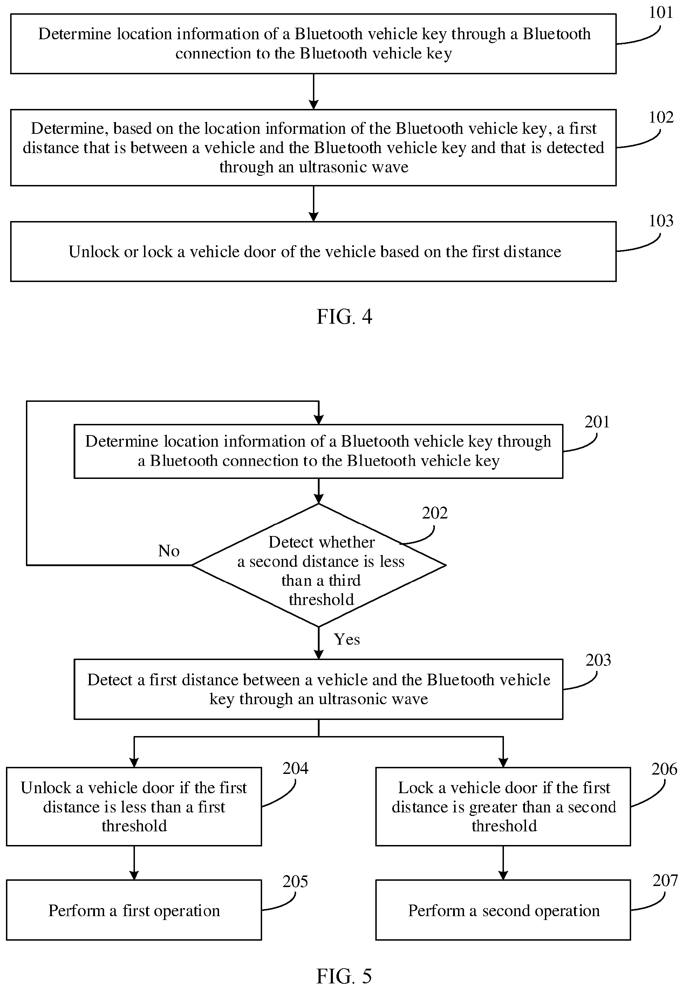

FIG. 4 is a flowchart of a vehicle door control method according to an embodiment of this application. The method may be applied to the vehicle shown in FIG. 1 or FIG. 2. For example, the method may be applied to the vehicle door control apparatus shown in FIG. 3. As shown in FIG. 4, the method includes the following steps.

Step 101: Determine location information of a Bluetooth vehicle key through a Bluetooth connection to the Bluetooth vehicle key.

In this embodiment of this application, if a distance between the Bluetooth vehicle key and the vehicle is less than a Bluetooth communication distance, the Bluetooth connection can be established between the Bluetooth vehicle key and the vehicle. The vehicle may determine the location information of the Bluetooth vehicle key through the Bluetooth connection. In other words, the vehicle can perform preliminary coarse positioning on the Bluetooth vehicle key based on a Bluetooth positioning technology. The location information may include a second distance between the Bluetooth vehicle key and the vehicle, and/or an area in which the Bluetooth vehicle key is located.

For example, when the distance between the Bluetooth vehicle key and the vehicle is less than the Bluetooth communication distance, the Bluetooth vehicle key can send an authentication request to the vehicle. The vehicle may perform authentication on the Bluetooth vehicle key, and send an authentication result to the Bluetooth vehicle key. If the vehicle determines that the authentication on the Bluetooth vehicle key succeeds, the vehicle may establish the Bluetooth connection to the Bluetooth vehicle key. If the vehicle determines that the authentication on the Bluetooth vehicle key fails, the vehicle does not establish the Bluetooth connection to the Bluetooth vehicle key, and may record the authentication result in a log.

After determining, based on the authentication result sent by the vehicle, that the authentication succeeds, the Bluetooth vehicle key may send a positioning beacon (beacon) frame to the vehicle, and the vehicle may determine the second distance between the vehicle and the Bluetooth vehicle key based on signal strength of the received positioning beacon frame. The second distance is negatively correlated with the signal strength.

Optionally, refer to FIG. 3. The vehicle may include a plurality of Bluetooth nodes (for example, one primary Bluetooth node and a plurality of secondary Bluetooth nodes). The vehicle may detect a distance between the vehicle and a Bluetooth vehicle key through each Bluetooth node, and may determine, based on distances detected by the plurality of Bluetooth nodes, the area in which the Bluetooth vehicle key is located. For example, the vehicle may determine, based on a three-point positioning method, the area in which the Bluetooth vehicle key is located. The area in which the Bluetooth vehicle key is located may be represented by coordinates of the Bluetooth vehicle key in a preset coordinate system, and the preset coordinate system may be a vehicle coordinate system.

Step 102: Determine, based on the location information of the Bluetooth vehicle key, a first distance that is between the vehicle and the Bluetooth vehicle key and that is detected through an ultrasonic wave.

Because the distance detected through the ultrasonic wave may include the distance between the vehicle and the Bluetooth vehicle key, and may further include a distance between the vehicle and another obstacle (for example, another vehicle or a pedestrian), the vehicle may accurately determine, with reference to the location information that is of the Bluetooth vehicle key and that is determined through the Bluetooth connection, the first distance that is between the vehicle and the Bluetooth vehicle key and that is detected through the ultrasonic wave.

Optionally, as shown in FIG. 3, the vehicle may include a plurality of ultrasonic sensors, and detection ranges of the plurality of ultrasonic sensors are different from each other. In other words, in the plurality of ultrasonic sensors, detection ranges of any two ultrasonic sensors do not completely overlap. Alternatively, it may be understood that sound wave transmission directions and coverage areas of any two ultrasonic sensors are different.

Each ultrasonic sensor can transmit an ultrasonic wave, and can receive an ultrasonic wave reflected by an obstacle (that is, a reflected echo). Then, the distance between the vehicle and the obstacle may be determined based on a time interval between sending an ultrasonic wave and receiving a reflected echo, and a propagation speed of the ultrasonic wave. In this embodiment of this application, the vehicle may accurately locate the Bluetooth vehicle key through some or all of the plurality of ultrasonic sensors.

In a first possible implementation, the vehicle may first obtain distances that are between the vehicle and a plurality of obstacles and that are detected by the plurality of ultrasonic sensors, and then determine, as the first distance between the vehicle and the Bluetooth vehicle key, a distance that is closest to the second distance and that is in the distances detected by the plurality of ultrasonic sensors.

In the first implementation, the vehicle may obtain the plurality of distances detected by the plurality of ultrasonic sensors, and may determine the first distance between the vehicle and the Bluetooth vehicle key from the plurality of detected distances. The first distance may be understood as an accurate value of the second distance.

For example, it is assumed that the vehicle includes three ultrasonic sensors, distances to three different obstacles detected by the three ultrasonic sensors are respectively 4.3 m, 3 m, and 5.8 m, and a second distance detected by the vehicle through a Bluetooth connection is 4 m. In the distances detected by the three ultrasonic sensors, 4.3 m is closest to 4 m. Therefore, the vehicle may determine that the first distance is 4.3 m.

It may be understood that the ultrasonic wave emitted by the ultrasonic sensor may be reflected by a user carrying the Bluetooth vehicle key, or may be reflected by another surrounding obstacle (for example, another vehicle or another pedestrian). Therefore, in addition to the distance between the vehicle and the Bluetooth vehicle key, the distances detected by the vehicle through the plurality of ultrasonic sensors may further include a distance between the vehicle and another obstacle. In the first implementation, because the vehicle may determine the distance closest to the second distance as the first distance, accuracy of the detected first distance between the vehicle and the Bluetooth vehicle key can be ensured.

It may be further understood that if the plurality of ultrasonic sensors detect only one distance between the vehicle and one obstacle, the distance may be directly determined as the first distance between the vehicle and the Bluetooth vehicle key.

In a second optional implementation, the vehicle may first determine at least one target ultrasonic sensor from the plurality of ultrasonic sensors, and then detect the first distance between the vehicle and the Bluetooth vehicle key through the at least one target ultrasonic sensor. A detection range of the at least one target ultrasonic sensor overlaps the area in which the Bluetooth vehicle key is located.

In the second implementation, the vehicle may obtain distances detected by only some target ultrasonic sensors, and may determine the first distance between the vehicle and the Bluetooth vehicle key based on the at least one distance detected by the target ultrasonic sensor. For example, the vehicle may determine a distance that is in the at least one distance and that is closest to the second distance as the first distance, or may determine an average value of the at least one distance as the first distance.

In the second implementation, the vehicle may detect the first distance through the target ultrasonic sensor whose detection range overlaps the area in which the Bluetooth vehicle key is located. Therefore, interference from another obstacle can also be avoided, and accuracy of the detected first distance can be ensured.

Step 103: Unlock or lock a vehicle door of the vehicle based on the first distance.

In this embodiment of this application, after the vehicle detects the first distance between the vehicle and the Bluetooth vehicle key through the ultrasonic wave, the vehicle may unlock or lock the vehicle door based on the first distance. Because precision of ultrasonic positioning may generally reach a centimeter level, accuracy of the first distance detected through the ultrasonic wave is high, and reliability of unlocking or locking the vehicle door based on the first distance is high.

Optionally, the vehicle pre-stores a first threshold and a second threshold. The first threshold may be determined based on a size of an unlocking area of the vehicle, the second threshold may be determined based on a size of a locking area of the vehicle, and the second threshold may be greater than or equal to the first threshold. For example, the first threshold may be 2 meters (m), and the second threshold may be 5 m.

If the vehicle detects that the first distance is less than the first threshold, the vehicle may determine that the Bluetooth vehicle key is already located in the unlocking area. Therefore, the vehicle may automatically unlock the vehicle door. If the vehicle detects that the first distance is greater than the second threshold, the vehicle may determine that the Bluetooth vehicle key is already located in the locking area. Therefore, the vehicle may automatically lock the vehicle door. If the vehicle detects that the first distance is not less than the first threshold and is not greater than the second threshold, the vehicle may determine that the Bluetooth vehicle key has not entered the unlocking area or the locking area. Therefore, the vehicle may continue to perform step 102, that is, continue to determine, based on the location information of the Bluetooth vehicle key, the first distance that is between the vehicle and the Bluetooth vehicle key and that is detected through the ultrasonic wave.

Optionally, in step 102, after detecting that a status of the vehicle meets a target status, the vehicle may further determine, based on the location information of the Bluetooth vehicle key, the first distance that is between the vehicle and the Bluetooth vehicle key and that is detected through the ultrasonic wave. The target status may include: no user takes a seat of the vehicle, and/or the vehicle door is in a closed state.

If the vehicle detects that no user takes the seat of the vehicle, it may be determined that no one is in the vehicle, and it may be determined that the vehicle has a requirement for unlocking or locking the vehicle door. Therefore, the first distance may be detected through the ultrasonic wave, so that the vehicle unlocks or locks the vehicle door based on the first distance. If the vehicle detects that the vehicle door is in the closed state, it may be determined that the vehicle door can be unlocked or locked. Therefore, the first distance may be detected through the ultrasonic wave, so that the vehicle unlocks or locks the vehicle door based on the first distance.

Optionally, in step 102, when detecting that the second distance is less than a third threshold, the vehicle may further determine, based on the location information of the Bluetooth vehicle key, the first distance that is between the vehicle and the Bluetooth vehicle key and that is detected through the ultrasonic wave. The third threshold may be a distance value pre-stored in the vehicle, and the third threshold may be determined based on an effective positioning range of an ultrasonic positioning system in the vehicle. For example, the third threshold may be less than or equal to an upper limit of the effective positioning range. The effective positioning range is a distance range in which the ultrasonic positioning system can implement accurate positioning.

After determining, through the Bluetooth connection, that the Bluetooth vehicle key is already within the effective positioning range of the ultrasonic positioning system, the vehicle may detect the first distance between the vehicle and the Bluetooth vehicle key through the ultrasonic wave. Therefore, reliability and accuracy of the first distance detected through the ultrasonic wave can be ensured.

In conclusion, this embodiment of this application provides the vehicle door control method. According to the method provided in this embodiment of this application, the location information of the Bluetooth vehicle key can be determined through the Bluetooth connection, and the first distance that is between the vehicle and the Bluetooth vehicle key and that is detected through the ultrasonic wave can be determined based on the location information of the Bluetooth vehicle key. Because precision of the first distance detected through the ultrasonic wave is high, reliability of unlocking or locking the vehicle door based on the first distance is high.

In addition, in this method, no new chip needs to be added to the vehicle key, and it only needs to be ensured that the vehicle key has a Bluetooth communication function. Because a dependency on performance of the vehicle key is low, application flexibility is effectively improved. In addition, the ultrasonic positioning system in the vehicle may reuse an existing ultrasonic sensor in the vehicle. Therefore, an increase in structure complexity of the vehicle and an increase in costs of the vehicle can be effectively avoided.

FIG. 5 is a flowchart of another vehicle door control method according to an embodiment of this application. The method may be applied to the vehicle shown in FIG. 1 or FIG. 2. For example, the method may be applied to the vehicle key perception fusion module of the vehicle door control apparatus shown in FIG. 3. As shown in FIG. 5, the method includes the following steps.

Step 201: Determine location information of a Bluetooth vehicle key through a Bluetooth connection to the Bluetooth vehicle key.

In this embodiment of this application, after the Bluetooth connection is established between the Bluetooth vehicle key and the vehicle, the vehicle may determine the location information of the Bluetooth vehicle key through the Bluetooth connection. The location information may include a second distance between the Bluetooth vehicle key and the vehicle, and/or an area in which the Bluetooth vehicle key is located. In other words, the location information may include at least one of the second distance and the area in which the Bluetooth vehicle key is located.

Step 202: Detect whether the second distance is less than a third threshold.

If the location information includes the second distance, the vehicle may detect whether the second distance is less than the third threshold. The third threshold may be determined based on an effective positioning range of an ultrasonic positioning system in the vehicle. For example, the third threshold may be less than or equal to an upper limit of the effective positioning range. It is assumed that the effective positioning range of the ultrasonic positioning system in the vehicle is 15 cm to 5.5 m. The third threshold may be less than or equal to 5.5 m, for example, may be 5 m.

If the second distance is less than the third threshold, the vehicle may determine that the Bluetooth vehicle key is already within the effective positioning range of the ultrasonic positioning system. Therefore, the vehicle may continue to perform step 203.

If the second distance is not less than the third threshold, the vehicle may determine that the Bluetooth vehicle key has not entered the effective positioning range of the ultrasonic positioning system. In this case, if the distance between the vehicle and the Bluetooth vehicle key is detected through the ultrasonic positioning system, because the ultrasonic positioning system cannot detect the Bluetooth vehicle key, reliability of the detected distance cannot be ensured. Based on this, the vehicle may continue to perform step 201, that is, continue to determine the location information of the Bluetooth vehicle key through the Bluetooth connection.

Step 203: Detect a first distance between the vehicle and the Bluetooth vehicle key through an ultrasonic wave.

If the second distance is less than the third threshold, to accurately locate the Bluetooth vehicle key, the vehicle may detect the first distance between the vehicle and the Bluetooth vehicle key through the ultrasonic wave. Based on this, the vehicle can accurately locate the Bluetooth vehicle key through the ultrasonic wave based on Bluetooth positioning.

For example, it is assumed that the third threshold is 5 m. When the vehicle detects, through the Bluetooth connection, that the second distance between the vehicle and the Bluetooth vehicle key is less than 5 m, the first distance between the vehicle and the Bluetooth vehicle key may be detected through the ultrasonic wave.

Optionally, as shown in FIG. 3, the vehicle may include a plurality of ultrasonic sensors, and detection ranges of the plurality of ultrasonic sensors are different from each other. In other words, in the plurality of ultrasonic sensors, detection ranges of any two ultrasonic sensors do not completely overlap. In other words, sound wave transmission directions of any two ultrasonic sensors are different, and coverage areas of any two ultrasonic sensors are the same.

In a first possible implementation, after detecting that the second distance is less than the third threshold, the vehicle may obtain distances that are between the vehicle and a plurality of obstacles and that are detected by the plurality of ultrasonic sensors. Then, the vehicle may determine, as the first distance between the vehicle and the Bluetooth vehicle key, a distance that is closest to the second distance and that is in the distances detected by the plurality of ultrasonic sensors.

In a second possible implementation, after detecting that the second distance is less than the third threshold, the vehicle may determine at least one target ultrasonic sensor from the plurality of ultrasonic sensors, and detect the first distance between the vehicle and the Bluetooth vehicle key through the at least one target ultrasonic sensor. A detection range of the at least one target ultrasonic sensor overlaps the area in which the Bluetooth vehicle key is located. For example, a detection range of each target ultrasonic sensor can cover the area in which the Bluetooth vehicle key is located.

In the second implementation, the vehicle may determine, as the first distance, a distance that is closest to the second distance and that is in the distances detected by the at least one target ultrasonic sensor. Alternatively, the vehicle may determine an average value of the distances detected by the at least one target ultrasonic sensor as the first distance.

Step 204: Unlock the vehicle door if the first distance is less than a first threshold.

In this embodiment of this application, the first threshold is pre-stored in the vehicle, the first threshold may be determined based on a size of an unlocking area of the vehicle, and the first threshold may be less than the third threshold. For example, the first threshold may be 2 m.

After detecting the first distance between the vehicle and the Bluetooth vehicle key through the ultrasonic wave, the vehicle may determine whether the first distance is less than the first threshold. If the first distance is less than the first threshold, the vehicle may determine that the Bluetooth vehicle key is already located in the unlocking area. Therefore, the vehicle may automatically unlock the vehicle door. If the first distance is not less than the first threshold, the vehicle may determine that the Bluetooth vehicle key has not entered the unlocking area. Therefore, the vehicle does not need to unlock the vehicle door, and may continue to perform step 203. In other words, the vehicle continues to detect the first distance between the vehicle and the Bluetooth vehicle key through the ultrasonic wave.

For example, it is assumed that the first threshold is 2 m. When the vehicle detects, through the ultrasonic wave, that the first distance between the vehicle and the Bluetooth vehicle key is less than 2 m, the vehicle may automatically unlock the vehicle door.

Step 205: Perform a first operation.

After detecting that the first distance is less than the first threshold, the vehicle may further perform the first operation. The first operation may include at least one of the following operations: turning on a puddle light of the vehicle; playing a first prompt tone, where the first prompt tone indicates that the vehicle door is unlocked; turning on an air conditioner of the vehicle; starting an engine of the vehicle; and sending vehicle status information of the vehicle to the Bluetooth vehicle key through the Bluetooth connection.

The vehicle may play the first prompt tone through a horn or a buzzer. The vehicle status information may include a vehicle health status, a remaining fuel amount, a remaining electricity amount, and/or an in-vehicle temperature, and the like. Based on the foregoing first operation, the user can accurately learn of a vehicle door status and/or a status of the vehicle, and an operation that needs to be performed by the user after the user gets on the vehicle can be simplified, thereby effectively improving user experience.

Step 206: Lock the vehicle door if the first distance is greater than a second threshold.

In this embodiment of this application, the vehicle further pre-stores the second threshold, and the second threshold may be determined based on a size of a locking area of the vehicle. In addition, the second threshold may be greater than or equal to the first threshold, and may be less than or equal to the third threshold. For example, the second threshold may be 5 m.

After detecting the first distance between the vehicle and the Bluetooth vehicle key through the ultrasonic wave, the vehicle may further determine whether the first distance is greater than the second threshold. If the first distance is greater than the second threshold, the vehicle may determine that the Bluetooth vehicle key is already located in the locking area. Therefore, the vehicle may automatically lock the vehicle door. If the first distance is not greater than the second threshold, the vehicle may determine that the Bluetooth vehicle key has not entered the locking area. Therefore, the vehicle does not need to lock the vehicle door, and may continue to perform step 203. In other words, the vehicle continues to detect the first distance between the vehicle and the Bluetooth vehicle key through the ultrasonic wave.

For example, it is assumed that the second threshold is 5 m. When the vehicle detects, through the ultrasonic wave, that the first distance between the vehicle and the Bluetooth vehicle key is greater than 5 m, the vehicle may automatically lock the vehicle door.

Step 207: Perform a second operation.

After detecting that the first distance is greater than the second threshold, the vehicle may further perform the second operation. The second operation may include at least one of the following operations: closing a window, turning off a light, and turning off an air conditioner of the vehicle; playing a second prompt tone, where the second prompt tone indicates that the vehicle door is locked; if the vehicle stops and an engine of the vehicle is in a non-start state, starting a parking system of the vehicle; and sending vehicle status information of the vehicle to the Bluetooth vehicle key through the Bluetooth connection.

The vehicle may play the second prompt tone through a horn or a buzzer. Closing the window, turning off the light, and turning off the air conditioner of the vehicle can ensure safety and reduce energy consumption. When the vehicle stops and the engine is in the non-start state, the parking system of the vehicle is started, and this can effectively prevent the vehicle from sliding and ensure safety. Based on the foregoing second operation, the user can accurately learn a vehicle door status and/or the status of the vehicle, and safety of the vehicle can be effectively ensured and energy consumption of the vehicle can be reduced.

It may be understood that, in a first possible example, before step 201, the Bluetooth vehicle key is located outside the vehicle. Correspondingly, in a process in which the user carries the Bluetooth vehicle key and approaches the vehicle, the Bluetooth vehicle key can establish a Bluetooth connection to the vehicle. In addition, in step 203, the first distance detected by the vehicle through the ultrasonic wave gradually decreases. When the first distance is less than the first threshold, the vehicle may automatically unlock the vehicle door.

In a second possible example, before step 201, the Bluetooth vehicle key is located in the vehicle. **In** other words, the Bluetooth vehicle key located in the vehicle can establish a Bluetooth connection to the vehicle. Correspondingly, in step 203, in a process in which the user carries the Bluetooth vehicle key and leaves the vehicle, the first distance detected by the vehicle through the ultrasonic wave gradually increases. When the first distance is greater than the second threshold, the vehicle may automatically lock the vehicle door.

For the first example, to ensure detection reliability, in step 202 and step 203, the vehicle may detect the first distance through the ultrasonic wave when detecting that the second distance decreases from a value greater than or equal to the third threshold to a value less than the third threshold. **In** other words, after determining that the Bluetooth vehicle key gradually approaches the vehicle and is located in the effective positioning range of the ultrasonic positioning system, the vehicle may detect the first distance through the ultrasonic wave.

For the second example, to ensure reliability of locking the vehicle door, in step 203, when detecting that the status of the vehicle meets a target status, the vehicle may detect the first distance between the vehicle and the Bluetooth vehicle key through the ultrasonic wave. The target status may include: no user takes a seat of the vehicle, and/or the vehicle door is in a closed state.

A seat sensor may be disposed in all or some of the seats in the vehicle, and the vehicle may detect, based on the seat sensor, whether the seat of the vehicle is taken by the user. The vehicle detects the first distance after determining that no user takes the seat, and locks the vehicle door based on the first distance. This can avoid a security risk caused by locking the vehicle door when there is a person in the vehicle. After determining that the vehicle door is in the closed state, the vehicle detects the first distance, and locks the vehicle door based on the first distance. This can ensure that the vehicle door can be reliably locked.

Optionally, in the second example, the vehicle may not need to perform the method shown in step 202, that is, the vehicle does not need to detect whether the second distance is less than the third threshold, but may perform step 203 when detecting that the status of the vehicle meets the target status.

It may be understood that, in the foregoing first example, in a scenario in which the user carries the vehicle key and approaches the vehicle, the vehicle may not need to detect whether the status of the vehicle meets the target status. Certainly, the vehicle may alternatively detect the first distance between the vehicle and the Bluetooth vehicle key through the ultrasonic wave after detecting that the status of the vehicle meets the target status. This is not limited in this embodiment of this application.

It may be further understood that, in the first possible implementation, the ultrasonic positioning system in the vehicle may always keep in a started state. **In** other words, the ultrasonic positioning system may detect a distance between the vehicle and an obstacle in real time. Correspondingly, in step 203, after detecting that the second distance is less than the third threshold, the vehicle may directly obtain the distance detected by the ultrasonic positioning system, and determine the first distance between the vehicle and the Bluetooth vehicle key based on the location information of the Bluetooth vehicle key.

In a second possible implementation, a default state of the ultrasonic positioning system may be a closed state or a low-frequency working state. Correspondingly, in step 203, after detecting that the second distance is less than the third threshold, the vehicle may first start the ultrasonic positioning system, or control the ultrasonic positioning system to work in a preset working frequency. Then, the vehicle may determine the first distance based on the distance detected by the ultrasonic positioning system. The preset working frequency is higher than a frequency in the low-frequency working state, and the frequency may be a frequency at which the ultrasonic sensor sends an ultrasonic wave.

In addition, in the second implementation, after the Bluetooth vehicle key is located in the vehicle, or the distance between the Bluetooth vehicle key and the vehicle is greater than a fourth threshold, or the Bluetooth connection between the Bluetooth vehicle key and the vehicle is disconnected, the vehicle may further control the ultrasonic positioning system to restore to the default state. The fourth threshold may be greater than the third threshold. For example, the fourth threshold may be 8 m.

It may be further understood that sequences of the steps of the vehicle door control method provided in this embodiment of this application may be appropriately adjusted, or steps may be correspondingly added or reduced as required. For example, step 205 and/or step 207 may be deleted as required; or step 205 may be performed synchronously with step 204, and step 207 may be performed synchronously with step 206; or step 202 may be deleted as required, and the vehicle may perform step 203 when detecting that the vehicle meets the target status.

In conclusion, this embodiment of this application provides the vehicle door control method. According to the method provided in this embodiment of this application, the location information of the Bluetooth vehicle key can be determined through the Bluetooth connection, and the first distance that is between the vehicle and the Bluetooth vehicle key and that is detected through the ultrasonic wave can be determined based on the location information of the Bluetooth vehicle key. Because precision of the first distance detected through the ultrasonic wave is high, reliability of unlocking or locking the vehicle door based on the first distance is high.

In addition, in this method, no new chip needs to be added to the vehicle key, and it only needs to be ensured that the vehicle key has a Bluetooth communication function. Because a dependency on performance of the vehicle key is low, application flexibility is effectively improved. In addition, the ultrasonic positioning system in the vehicle may reuse an existing ultrasonic sensor in the vehicle. Therefore, an increase in structure complexity of the vehicle and an increase in costs of the vehicle can be effectively avoided.

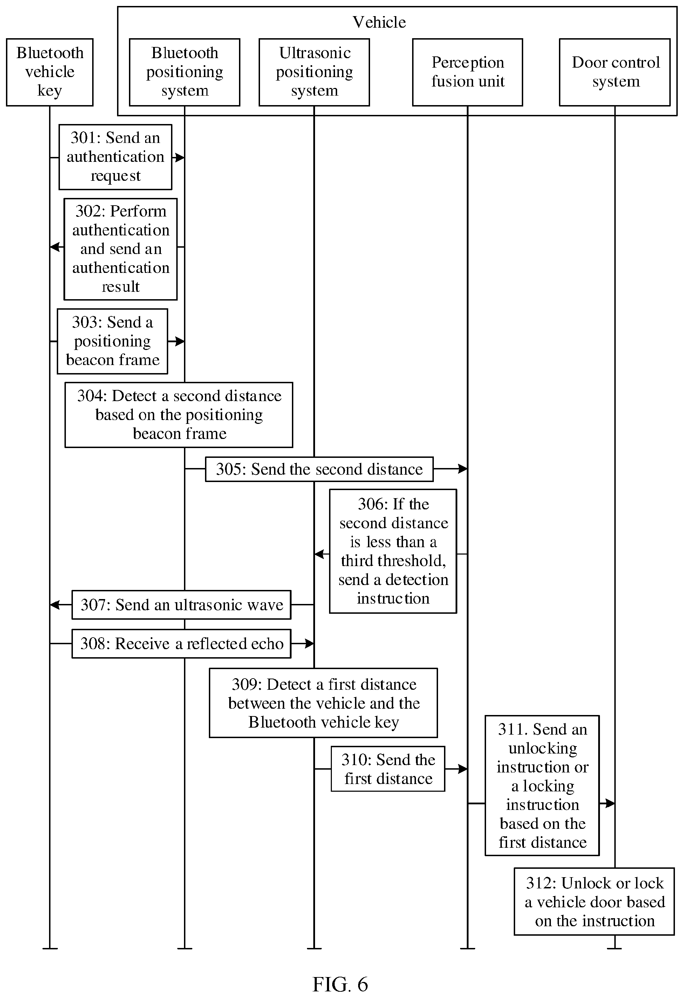

The following describes a method for automatically controlling a vehicle door by a vehicle in a process in which a user carrying a Bluetooth vehicle key gradually approaches the vehicle. As shown in FIG. 6, the vehicle door control method may include the following steps.

Step 301: The Bluetooth vehicle key sends an authentication request to a Bluetooth positioning system of the vehicle.

In this embodiment of this application, in a process in which the user carrying the Bluetooth vehicle key gradually approaches the vehicle, if a distance between the Bluetooth vehicle key and the vehicle is less than a Bluetooth communication distance, the Bluetooth vehicle key may send the authentication request to the Bluetooth positioning system of the vehicle. For example, the Bluetooth vehicle key may sense, by listening to a broadcast frame, whether the Bluetooth vehicle key has entered a Bluetooth connection range of the vehicle, that is, whether the distance between the Bluetooth vehicle key and the vehicle is less than the Bluetooth communication distance.

Step 302: The Bluetooth positioning system performs authentication on the Bluetooth vehicle key, and sends an authentication result to the Bluetooth vehicle key.

After receiving the authentication request, the Bluetooth positioning system of the vehicle may perform authentication on the Bluetooth vehicle key, and send the authentication result to the Bluetooth vehicle key. If the vehicle determines that the authentication on the Bluetooth vehicle key succeeds, the vehicle may establish a Bluetooth connection to the Bluetooth vehicle key. If the vehicle determines that the authentication on the Bluetooth vehicle key fails, the vehicle does not establish a Bluetooth connection to the Bluetooth vehicle key.

Step 303: If the authentication on the Bluetooth vehicle key succeeds, send a positioning beacon frame to the Bluetooth positioning system.

After determining, based on the received authentication result, that the authentication succeeds, the Bluetooth vehicle key may send the positioning beacon frame to the Bluetooth positioning system of the vehicle.

Step 304: The Bluetooth positioning system detects a second distance between the vehicle and the Bluetooth vehicle key based on the positioning beacon frame.

The Bluetooth positioning system of the vehicle may determine the second distance between the vehicle and the Bluetooth vehicle key based on signal strength of the received positioning beacon frame. The second distance is negatively correlated with the signal strength. In other words, a stronger signal strength indicates a shorter second distance.

Step 305: The Bluetooth positioning system sends the second distance to a perception fusion unit.

The Bluetooth positioning system may send the determined first distance to the perception fusion unit. It may be understood that, in step 303, the Bluetooth vehicle key may periodically send the positioning beacon frame based on a preset sending period. Correspondingly, the Bluetooth positioning system may periodically update and report the second distance based on the received positioning beacon frame.

Step 306: If the perception fusion unit detects that the second distance is less than a third threshold, the perception fusion unit sends a detection instruction to an ultrasonic positioning system.

If the perception fusion unit detects that the second distance is less than the third threshold, the perception fusion unit may determine that the Bluetooth vehicle key is already within an effective positioning range of the ultrasonic positioning system. Therefore, the perception fusion unit may send the detection instruction to the ultrasonic positioning system.

Step 307: The ultrasonic positioning system sends an ultrasonic wave.

An ultrasonic controller in the ultrasonic positioning system may control, based on the received detection instruction, a plurality of ultrasonic sensors or at least one target ultrasonic sensor to send ultrasonic waves.

Optionally, if a default state of each of the plurality of ultrasonic sensors in the ultrasonic positioning system is a closed state, the ultrasonic controller may start the plurality of ultrasonic sensors or the at least one target ultrasonic sensor based on the received detection instruction. If a default state of each of the plurality of ultrasonic sensors in the ultrasonic positioning system is a low-frequency working state, the ultrasonic controller may control, based on the received detection instruction, the plurality of ultrasonic sensors or the at least one target ultrasonic sensor to work at a preset working frequency. If a default state of each of the plurality of ultrasonic sensors in the ultrasonic positioning system is a normal working state, the ultrasonic positioning system may report a detected first distance between the vehicle and the Bluetooth vehicle key to the perception fusion unit based on the detection instruction.

Step 308: The ultrasonic positioning system receives a reflected echo.

The ultrasonic wave sent by the ultrasonic sensor is reflected when the ultrasonic wave encounters an obstacle. The ultrasonic positioning system can receive the reflected echo reflected by the obstacle. The obstacle may include the user carrying the Bluetooth vehicle key, and may further include another pedestrian, another vehicle, or the like.

Step 309: The ultrasonic positioning system detects the first distance between the vehicle and the Bluetooth vehicle key.

In this embodiment of this application, the ultrasonic positioning system may determine the first distance between the vehicle and the Bluetooth vehicle key based on a time interval between sending an ultrasonic wave and receiving a reflected echo. For a process of determining the first distance, refer to related descriptions of step 102 or step 203. Details are not described herein again.

Step 310: The ultrasonic positioning system sends the first distance to the perception fusion unit.

The ultrasonic positioning system may send the determined first distance to the perception fusion unit. It may be understood that, in step 307, the ultrasonic positioning system may periodically send the ultrasonic wave based on a preset sending period. Correspondingly, the ultrasonic positioning system may periodically update and report the first distance based on the received reflected echo.

It may be further understood that the ultrasonic positioning system may further report, to the perception fusion unit, a distance that is between the vehicle and an obstacle and that is detected through the ultrasonic wave, and the perception fusion unit determines, with reference to location information of the Bluetooth vehicle key, the first distance that is between the vehicle and the Bluetooth vehicle key and that is detected through the ultrasonic wave. In other words, step 309 may alternatively be performed by the perception fusion unit.

Step 311: The perception fusion unit sends an unlocking instruction or a locking instruction to a door control system of the vehicle based on the first distance.

If the perception fusion unit detects that the first distance is less than a first threshold, the perception fusion unit may determine that the Bluetooth vehicle key is already located in an unlocking area of the vehicle. Therefore, the perception fusion unit may send the unlocking instruction to the door control system of the vehicle, to unlock the vehicle door. If the perception fusion unit detects that the first distance is greater than a second threshold, the perception fusion unit may determine that the Bluetooth vehicle key is already located in a locking area of the vehicle. Therefore, the perception fusion unit may send the locking instruction to the door control system of the vehicle, to lock the vehicle door.

Step 312: The door control system unlocks or locks the vehicle door based on the instruction.

If the door control system receives the unlocking instruction, the door control system may unlock the door. If the door control system receives the locking instruction, the door control system may lock the door.

Optionally, after detecting that the first distance is less than the first threshold, the perception fusion unit may further control a vehicle body control system to perform a first operation. The first operation may include at least one of the following operations: turning on a puddle light of the vehicle; playing a first prompt tone, where the first prompt tone indicates that the vehicle door is unlocked; turning on an air conditioner of the vehicle; starting an engine of the vehicle; and sending vehicle status information of the vehicle to the Bluetooth vehicle key through the Bluetooth connection.

After detecting that the first distance is greater than the second threshold, the perception fusion unit may further control the vehicle body control system to perform a second operation. The second operation may include at least one of the following operations: closing a window, turning off a light, and turning off an air conditioner of the vehicle; playing a second prompt tone, where the second prompt tone indicates that the vehicle door is locked; if the vehicle stops and an engine of the vehicle is in a non-start state, starting a parking system of the vehicle; and sending vehicle status information of the vehicle to the Bluetooth vehicle key through the Bluetooth connection.

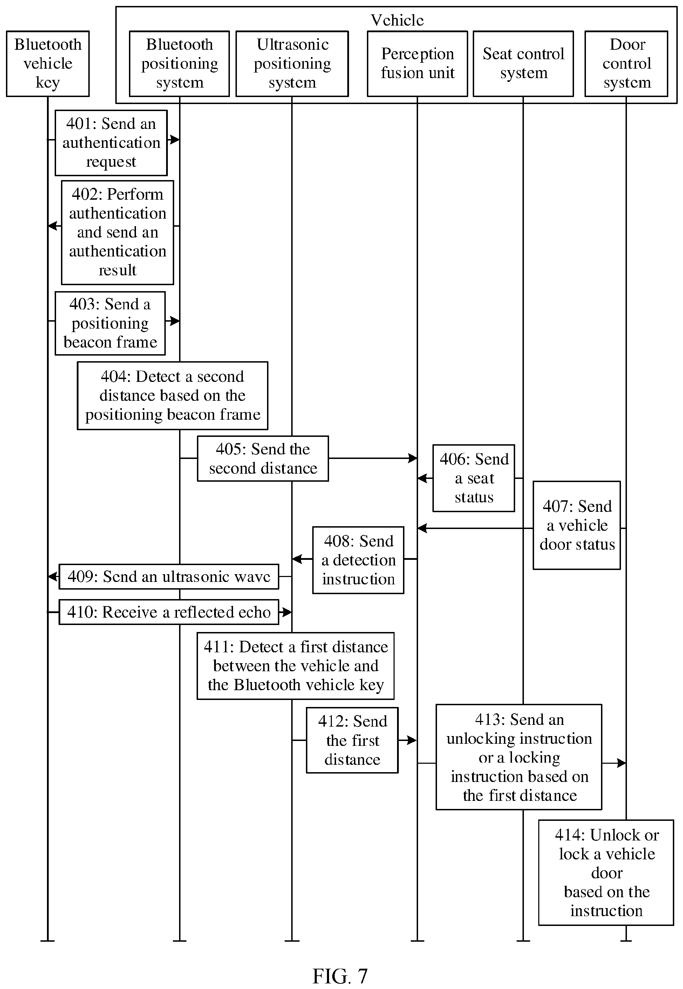

The following describes a method for automatically controlling a vehicle door by a vehicle in a process in which a user carrying a Bluetooth vehicle key leaves a seat and opens the vehicle door and leaves the vehicle (or charges the vehicle, or checks the vehicle). As shown in FIG. 7, the vehicle door control method may include the following steps.

Step 401: The Bluetooth vehicle key sends an authentication request to a Bluetooth positioning system of the vehicle.

Step 402: The Bluetooth positioning system performs authentication on the Bluetooth vehicle key, and sends an authentication result to the Bluetooth vehicle key.

Step 403: If the authentication on the Bluetooth vehicle key succeeds, send a positioning beacon frame to the Bluetooth positioning system.

Step 404: The Bluetooth positioning system detects a second distance between the vehicle and the Bluetooth vehicle key based on the positioning beacon frame.

Step 405: The Bluetooth positioning system sends the second distance to a perception fusion unit.

For step 401 to step 405, refer to related descriptions of step 301 to step 305 in the embodiment shown in FIG. 6. Details are not described herein again.

Step 406: The perception fusion unit obtains a seat status.

In this embodiment of this application, the perception fusion unit can obtain the seat status through a seat control system, and the seat status may indicate whether a seat of the vehicle is taken by a user. Optionally, the perception fusion unit can further obtain seat belt information through the seat control system, where the seat belt information may indicate whether a seat belt buckle of the vehicle is inserted into a seat belt jack.

Step 407: A door control system sends a vehicle door status to the perception fusion unit.

The perception fusion unit can obtain the vehicle door status through the door control system. The vehicle door status may be one of an opened state and a closed state.

Step 408: The perception fusion unit sends a detection instruction to an ultrasonic positioning system.

In this embodiment of this application, if the perception fusion unit determines, based on the obtained seat status, seat belt information, and vehicle door status, that the status of the vehicle meets a target status, the perception fusion unit may send the detection instruction to the ultrasonic positioning system. The target status may include: no user takes the seat of the vehicle, and/or the vehicle door is in the closed state.

Step 409: The ultrasonic positioning system sends an ultrasonic wave based on the detection instruction.

Step 410: The ultrasonic positioning system receives a reflected echo.

Step 411: The ultrasonic positioning system detects a first distance between the vehicle and the Bluetooth vehicle key.

Step 412: The ultrasonic positioning system sends the first distance to the perception fusion unit.

Step 413: The perception fusion unit sends an unlocking instruction or a locking instruction to the door control system of the vehicle based on the first distance.

Step 414: The door control system unlocks or locks the vehicle door based on the instruction.

For an implementation process of step 409 to step 413, refer to related descriptions of step 307 to step 312 in the embodiment shown in FIG. 6. Details are not described herein again.

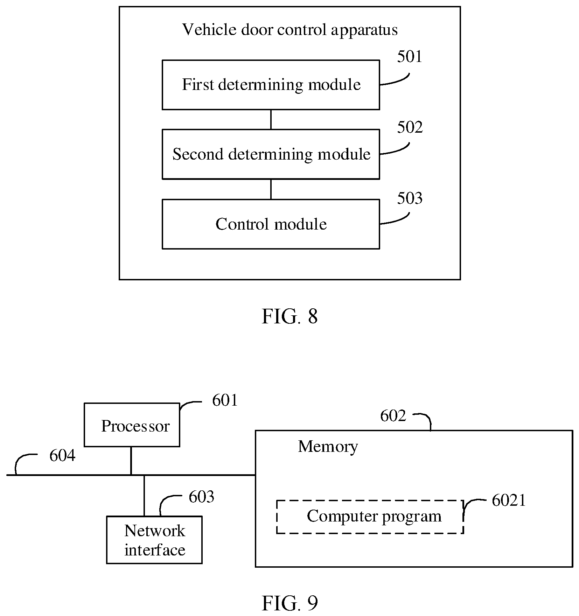

FIG. 8 is a diagram of a structure of a vehicle door control apparatus according to an embodiment of this application. The vehicle door control apparatus may be applied to the vehicle shown in FIG. 1 or FIG. 2, and may implement the vehicle door control method provided in the foregoing method embodiments. As shown in FIG. 8, the vehicle door control apparatus includes the following modules.

A first determining module 501 is configured to determine location information of a Bluetooth vehicle key through a Bluetooth connection to the Bluetooth vehicle key. For function implementations of the first determining module 501, refer to related descriptions of step 101 or step 201.

A second determining module 502 is configured to determine, based on the location information of the Bluetooth vehicle key, a first distance that is between the vehicle and the Bluetooth vehicle key and that is detected through an ultrasonic wave. For function implementations of the second determining module 502, refer to related descriptions of step 102 or step 203.

A control module 503 is configured to unlock or lock a vehicle door of the vehicle based on the first distance. For function implementations of the control module 503, refer to related descriptions of step 103.

Optionally, the control module 503 may be configured to: unlock the vehicle door if the first distance is less than a first threshold; or lock the vehicle door if the first distance is greater than a second threshold. The second threshold is greater than or equal to the first threshold. For function implementations of the control module 503, refer to related descriptions of step 204 and step 206.

Optionally, the vehicle may include a plurality of ultrasonic sensors, and detection ranges of the plurality of ultrasonic sensors are different from each other.

In a first optional implementation, the location information may include a second distance between the Bluetooth vehicle key and the vehicle. The second determining module 502 may be configured to: obtain distances that are between the vehicle and a plurality of obstacles and that are detected by the plurality of ultrasonic sensors, and determine, as the first distance between the vehicle and the Bluetooth vehicle key, a distance that is closest to the second distance and that is in the distances that are between the vehicle and the plurality of obstacles and that are detected by the plurality of ultrasonic sensors.

In a second optional implementation, the location information includes an area in which the Bluetooth vehicle key is located. The second determining module 502 may be configured to: detect the first distance between the vehicle and the Bluetooth vehicle key through at least one target ultrasonic sensor in the plurality of ultrasonic sensors. A detection range of the at least one target ultrasonic sensor overlaps the area in which the Bluetooth vehicle key is located.

Optionally, the vehicle includes a plurality of Bluetooth nodes, and the plurality of Bluetooth nodes are distributed at different locations of a vehicle body of the vehicle. The first determining module 501 may be configured to determine, based on a Bluetooth signal detected by the plurality of Bluetooth nodes, the area in which the Bluetooth vehicle key is located.

Optionally, the second determining module 502 may be configured to: if the second distance that is between the vehicle and the Bluetooth vehicle key and that is determined based on the location information is less than a third threshold, determine, based on the location information, the first distance that is between the vehicle and the Bluetooth vehicle key and that is detected through the ultrasonic wave. For function implementations of the second determining module 502, refer to related descriptions of step 202.

Optionally, the second determining module 502 may be configured to: if a status of the vehicle meets a target status, determine, based on the location information of the Bluetooth vehicle key, the first distance that is between the vehicle and the Bluetooth vehicle key and that is detected through the ultrasonic wave. The target status includes: no user takes a seat of the vehicle, and/or the vehicle door is in a closed state.

Optionally, the control module 503 may be further configured to perform at least one of the following operations based on unlocking the vehicle door of the vehicle: turn on a puddle light of the vehicle; play a first prompt tone, where the first prompt tone indicates that the vehicle door is unlocked; turn on an air conditioner of the vehicle; start an engine of the vehicle; and send vehicle status information of the vehicle to the Bluetooth vehicle key through the Bluetooth connection. For function implementations of the control module 503, refer to related descriptions of step 205.

Optionally, the control module 503 may be further configured to perform at least one of the following operations based on locking a door of the vehicle: close a window, turn off a light, and turn off an air conditioner of the vehicle; play a second prompt tone, where the second prompt tone indicates that the vehicle door is locked; if the vehicle stops and an engine of the vehicle is in a non-start state, start a parking system of the vehicle; and send vehicle status information of the vehicle to the Bluetooth vehicle key through the Bluetooth connection. For function implementations of the control module 503, refer to related descriptions of step 207.

It may be clearly understood by a person skilled in the art that, for the purpose of convenient and brief description, for detailed working processes of the vehicle door control apparatus and the modules, refer to corresponding processes in the foregoing method embodiments, and details are not described herein again.

It should be understood that the vehicle door control apparatus provided in embodiments of this application may be further implemented by using an application-specific integrated circuit (application-specific integrated circuit, ASIC) or a programmable logic device (programmable logic device, PLD). The PLD may be a complex program logic device (complex programmable logical device, CPLD), a field-programmable gate array (field-programmable gate array, FPGA), a generic array logic (generic array logic, GAL), or any combination thereof. In addition, the vehicle door control method provided in the foregoing method embodiments may alternatively be implemented by using software. When the vehicle door control method provided in the foregoing method embodiments is implemented by using software, function modules in the vehicle door control apparatus may also be software modules.

FIG. 9 is a diagram of a structure of another vehicle door control apparatus according to an embodiment of this application. The vehicle door control apparatus may be applied to the vehicle shown in FIG. 1 or FIG. 2, and may implement the vehicle door control method provided in the foregoing method embodiments. Refer to FIG. 9. The vehicle door control apparatus includes a processor 601, a memory 602, a network interface 603, and a bus 604.

The memory 602 stores a computer program 6021, and the computer program 6021 is used to implement various application functions. The processor 601 is configured to execute the computer program 6021 to implement the vehicle door control method provided in the foregoing method embodiments. For example, when executing the computer program 6021, the processor 601 may implement functions of the modules shown in FIG. 8.

The processor 601 may be a central processing unit (central processing unit, CPU), or the processor 601 may be another general purpose processor, a digital signal processor (digital signal processor, DSP), an ASIC, an FPGA, a graphics processing unit (graphics processing unit, GPU), another programmable logic device, a discrete gate, a transistor logic device, a discrete hardware component, or the like. The general purpose processor may be a microprocessor, any conventional processor, or the like.

The memory 602 may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative descriptions, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

There may be a plurality of network interfaces 603, and the network interface 603 is configured to implement a communication connection (which may be wired or wireless) to another device. In this embodiment of this application, the network interface 603 is configured to send/receive a packet. The another device may be a device like a terminal, a server, or a VM, or another network device.

The bus 604 is configured to connect the processor 601, the memory 602, and the network interface 603. In addition, in addition to a data bus, the bus 604 may further include a power bus, a control bus, a status signal bus, and the like. However, for clear description, various types of buses are all marked as the bus 604 in the figure.

An embodiment of this application further provides a computer-readable storage medium. The computer-readable storage medium stores instructions. The instructions are executed by a processor to implement the vehicle door control method provided in the foregoing method embodiments.

An embodiment of this application further provides a computer program product including instructions. The instructions are executed by a processor to implement the vehicle door control method provided in the foregoing method embodiments.

An embodiment of this application further provides a chip. The chip may be applied to the vehicle door control apparatus provided in the foregoing aspects. The chip may include a programmable logic circuit and/or program instructions, and the chip is configured to implement the vehicle door control method provided in the foregoing method embodiments. For example, the chip may be the vehicle key perception fusion module in the vehicle door control apparatus shown in FIG. 3.

An embodiment of this application further provides a vehicle. The vehicle may include a vehicle door and the vehicle door control apparatus provided in the foregoing embodiments. The vehicle door control apparatus may implement the vehicle door control method provided in the foregoing method embodiments. For a structure of the vehicle door control apparatus, refer to FIG. 3, FIG. 8, or FIG. 9.

A person of ordinary skill in the art may understand that all or some of the steps of the embodiments may be implemented by hardware or a program instructing related hardware. The program may be stored in a computer-readable storage medium. The storage medium may be a read-only memory, a magnetic disk, an optical disc, or the like.

In embodiments of this application, the terms "first", "second", "third" are merely used for a description purpose, but shall not be understood as an indication or implication of relative importance. In embodiments of this application, the term "at least one" means one or more, and the term "a plurality of" means two or more.

The term "and/or" in embodiments of this application describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

The foregoing descriptions are merely implementations of this application, but are not intended to limit the protection scope of this application. Any modification or replacement readily figured out by a person skilled in the art within the technical scope disclosed in this application shall fall within the protection scope of this application. Therefore, the protection scope of this application shall be subject to the protection scope of the claims.

## Claims

1. A vehicle door control method, applied to a vehicle, wherein the method comprises:
determining location information of a Bluetooth vehicle key through a Bluetooth connection to the Bluetooth vehicle key;
determining, based on the location information of the Bluetooth vehicle key, a first distance that is between the vehicle and the Bluetooth vehicle key and that is detected through an ultrasonic wave; and
unlocking or locking a vehicle door of the vehicle based on the first distance.

2. The method according to claim 1, wherein the unlocking or locking a vehicle door of the vehicle based on the first distance comprises:
unlocking the vehicle door if the first distance is less than a first threshold; or
locking the vehicle door if the first distance is greater than a second threshold, wherein the second threshold is greater than or equal to the first threshold.

3. The method according to claim 1 or 2, wherein the vehicle comprises a plurality of ultrasonic sensors, and detection ranges of the plurality of ultrasonic sensors are different from each other; and the location information comprises a second distance between the Bluetooth vehicle key and the vehicle; and
the determining, based on the location information of the Bluetooth vehicle key, a first distance that is between the vehicle and the Bluetooth vehicle key and that is detected through an ultrasonic wave comprises:
obtaining distances that are between the vehicle and a plurality of obstacles and that are detected by the plurality of ultrasonic sensors; and
determining, as the first distance between the vehicle and the Bluetooth vehicle key, a distance that is closest to the second distance and that is in the distances that are between the vehicle and the plurality of obstacles and that are detected by the plurality of ultrasonic sensors.

4. The method according to claim 1 or 2, wherein the vehicle comprises a plurality of ultrasonic sensors, and detection ranges of the plurality of ultrasonic sensors are different from each other; and the location information comprises an area in which the Bluetooth vehicle key is located; and
the determining, based on the location information of the Bluetooth vehicle key, a first distance that is between the vehicle and the Bluetooth vehicle key and that is detected through an ultrasonic wave comprises:
detecting the first distance between the vehicle and the Bluetooth vehicle key through at least one target ultrasonic sensor in the plurality of ultrasonic sensors, wherein
a detection range of the at least one target ultrasonic sensor overlaps the area in which the Bluetooth vehicle key is located.

5. The method according to claim 4, wherein the vehicle comprises a plurality of Bluetooth nodes, and the plurality of Bluetooth nodes are distributed at different locations of a vehicle body of the vehicle; and the determining location information of a Bluetooth vehicle key through a Bluetooth connection to the Bluetooth vehicle key comprises:
determining, based on a Bluetooth signal detected by the plurality of Bluetooth nodes, the area in which the Bluetooth vehicle key is located.

6. The method according to any one of claims 1 to 5, wherein the determining, based on the location information of the Bluetooth vehicle key, a first distance that is between the vehicle and the Bluetooth vehicle key and that is detected through an ultrasonic wave comprises:
if the second distance that is between the vehicle and the Bluetooth vehicle key and that is determined based on the location information is less than a third threshold, determining, based on the location information, the first distance that is between the vehicle and the Bluetooth vehicle key and that is detected through the ultrasonic wave.

7. The method according to any one of claims 1 to 6, wherein the determining, based on the location information of the Bluetooth vehicle key, a first distance that is between the vehicle and the Bluetooth vehicle key and that is detected through an ultrasonic wave comprises:
if a status of the vehicle meets a target status, determining, based on the location information, the first distance that is between the vehicle and the Bluetooth vehicle key and that is detected through the ultrasonic wave, wherein
the target status comprises: no user takes a seat of the vehicle, and/or the vehicle door is in a closed state.

8. The method according to any one of claims 1 to 7, wherein the method further comprises: performing at least one of the following operations based on unlocking the vehicle door of the vehicle:
turning on a puddle light of the vehicle;
playing a first prompt tone, wherein the first prompt tone indicates that the vehicle door is unlocked;
turning on an air conditioner of the vehicle;
starting an engine of the vehicle; and
sending vehicle status information of the vehicle to the Bluetooth vehicle key through the Bluetooth connection.

9. The method according to any one of claims 1 to 7, wherein the method further comprises: performing at least one of the following operations based on locking the vehicle door of the vehicle:
closing a window, turning off a light, and turning off an air conditioner of the vehicle;
playing a second prompt tone, wherein the second prompt tone indicates that the vehicle door is locked;
if the vehicle stops and an engine of the vehicle is in a non-start state, starting a parking system of the vehicle; and
sending vehicle status information of the vehicle to the Bluetooth vehicle key through the Bluetooth connection.

10. A vehicle door control apparatus, used in a vehicle, wherein the apparatus comprises:
a first determining module, configured to determine location information of a Bluetooth vehicle key through a Bluetooth connection to the Bluetooth vehicle key;
a second determining module, configured to determine, based on the location information of the Bluetooth vehicle key, a first distance that is between the vehicle and the Bluetooth vehicle key and that is detected through an ultrasonic wave; and
a control module, configured to unlock or lock a vehicle door of the vehicle based on the first distance.

11. The apparatus according to claim 10, wherein the control module is configured to:
unlock the vehicle door if the first distance is less than a first threshold; or
lock the vehicle door if the first distance is greater than a second threshold, wherein the second threshold is greater than or equal to the first threshold.

12. The apparatus according to claim 10 or 11, wherein the vehicle comprises a plurality of ultrasonic sensors, and detection ranges of the plurality of ultrasonic sensors are different from each other; the location information comprises a second distance between the Bluetooth vehicle key and the vehicle; and the second determining module is configured to:
obtain distances that are between the vehicle and a plurality of obstacles and that are detected by the plurality of ultrasonic sensors; and
determine, as the first distance between the vehicle and the Bluetooth vehicle key, a distance that is closest to the second distance and that is in the distances that are between the vehicle and the plurality of obstacles and that are detected by the plurality of ultrasonic sensors.

13. The apparatus according to claim 10 or 11, wherein the vehicle comprises a plurality of ultrasonic sensors, and detection ranges of the plurality of ultrasonic sensors are different from each other; the location information comprises an area in which the Bluetooth vehicle key is located; and the second determining module is configured to:
detect the first distance between the vehicle and the Bluetooth vehicle key through at least one target ultrasonic sensor in the plurality of ultrasonic sensors, wherein
a detection range of the at least one target ultrasonic sensor overlaps the area in which the Bluetooth vehicle key is located.

14. The apparatus according to claim 13, wherein the vehicle comprises a plurality of Bluetooth nodes, and the plurality of Bluetooth nodes are distributed at different locations of a vehicle body of the vehicle; and the first determining module is configured to:
determine, based on a Bluetooth signal detected by the plurality of Bluetooth nodes, the area in which the Bluetooth vehicle key is located.

15. The apparatus according to any one of claims 10 to 14, wherein the second determining module is configured to:
if the second distance that is between the vehicle and the Bluetooth vehicle key and that is determined based on the location information is less than a third threshold, determine, based on the location information, the first distance that is between the vehicle and the Bluetooth vehicle key and that is detected through the ultrasonic wave.

16. The apparatus according to any one of claims 10 to 15, wherein the second determining module is configured to:
if a status of the vehicle meets a target status, determine, based on the location information of the Bluetooth vehicle key, the first distance that is between the vehicle and the Bluetooth vehicle key and that is detected through the ultrasonic wave, wherein
the target status comprises: no user takes a seat of the vehicle, and/or the vehicle door is in a closed state.

17. The apparatus according to any one of claims 10 to 16, wherein the control module is further configured to perform at least one of the following operations based on unlocking the vehicle door of the vehicle:
turn on a puddle light of the vehicle;
play a first prompt tone, wherein the first prompt tone indicates that the vehicle door is unlocked;
turn on an air conditioner of the vehicle;
start an engine of the vehicle; and
send vehicle status information of the vehicle to the Bluetooth vehicle key through the Bluetooth connection.

18. The apparatus according to any one of claims 10 to 16, wherein the control module is further configured to perform at least one of the following operations based on locking the vehicle door of the vehicle:
close a window, turn off a light, and turn off an air conditioner of the vehicle;
play a second prompt tone, wherein the second prompt tone indicates that the vehicle door is locked;
if the vehicle stops and an engine of the vehicle is in a non-start state, start a parking system of the vehicle; and
send vehicle status information of the vehicle to the Bluetooth vehicle key through the Bluetooth connection.

19. A vehicle door control apparatus, wherein the vehicle door control apparatus comprises a memory, a processor, and a computer program that is stored in the memory and that can run on the processor, and when executing the computer program, the processor implements the method according to any one of claims 1 to 9.

20. A computer-readable storage medium, wherein the computer-readable storage medium stores instructions, and the instructions are executed by a processor to implement the method according to any one of claims 1 to 9.

21. A computer program product comprising instructions, wherein the instructions are executed by a processor to implement the method according to any one of claims 1 to 9.

22. A vehicle, wherein the vehicle comprises a vehicle door and the vehicle door control apparatus according to any one of claims 10 to 19.
